Europäisches Patentamt

European Patent Office

Office européen des brevets

(11) Veröffentlichungsnummer: **0 391 155**

**A1**

(12) **EUROPÄISCHE PATENTANMELDUNG**

(21) Anmeldenummer: **90105428.8**

(22) Anmeldetag: **22.03.90**

(51) Int. Cl.⁵: **A47J 47/10, B65D 81/20**

(30) Priorität: **05.04.89 DE 8904196 U**

(43) Veröffentlichungstag der Anmeldung:
**10.10.90 Patentblatt 90/41**

(84) Benannte Vertragsstaaten:
**AT CH DE ES FR GB LI**

(71) Anmelder: **NIRO-PLAN AG**
**Baarerstr. 59**
**CH-6300 Zug(CH)**

(72) Erfinder: **Der Erfinder hat auf seine Nennung
verzichtet**

(74) Vertreter: **Brommer, Hans Joachim, Dr.-Ing. et
al**
**Patentanwälte Dipl.-Ing. R. Lemcke Dr.-Ing.
H.J. Brommer Bismarckstrasse 16 Postfach
4026**
**D-7500 Karlsruhe 1(DE)**

(54) **Gastro-Normbehälter für Lebensmittel.**

(57) Die Erfindung betrifft einen Gastro-Normbehälter
zum Transportieren, Lagern und Anbieten von Lebensmitteln, insbesondere in Großküchen, Selbstbedienungsgaststätten und dergleichen. Er besteht aus
einem unteren schalenförmigen Teil (1), einem abnehmbaren Deckel (3) und einer dazwischen angeordneten Dichtung (5). Damit dieser Behälter künftig
auch außerhalb von Großküchen und Gaststätten
eingesetzt werden kann und für längere Lagerzeiten
bzw. Transportwege geeignet ist, weist sein Deckel
eine Öffnung auf, in die ein Vakuumventil (6) eingebaut ist. Zugleich sind der Behälter und der Deckel
so verstärkt, daß sie die beim Evakuieren auftretenden Kräfte aufnehmen können. Hierfür empfiehlt sich
eine kreisförmige Kontur des Behälter-Innenraumes,
der durch einen sich oben anschließenden, radial
nach außen laufenden Rand in eine etwa rechteckige
Außenkontur übergeht, so daß der Behälter weiterhin
in die bisher üblichen, genormten Regaleinrichtungen hineinpaßt.

Fig. 1

## Gastro-Normbehälter für Lebensmittel

Die Erfindung betrifft einen Gastro-Normbehälter zum Transportieren, Lagern und Anbieten von Lebensmitteln, insbesondere in Großküchen, Selbstbedienungsgaststätten und dergleichen, bestehend aus einem unteren schalenförmigen Teil und einem abnehmbaren Deckel, wobei diese beiden Teile insbesondere aus Edelstahl bestehen, und aus einer dazwischen angeordneten Dichtung.

Derartige Gastro-Normbehälter werden in starkem Masse in Großküchen, Selbstbedienungsgaststätten und dergleichen verwendet, um die Speisen ohne Umpacken in ein und demselben Behälter lagern, kühlen, kochen oder warmhalten und letztlich in entsprechenden Theken ausgeben zu können. Um die Handhabung der Behälter in den unterschiedlichen Behandlungsstufen zu erleichtern, weisen sie bestimmte Normmaße auf, die zu entsprechenden Führungen in Regalwagen, Kühlschränken, Warmhaltetheken usw. passen.

Für bestimmte Anwendungsfälle können die Normbehälter durch einen Deckel verschlossen werden. Dieser Deckel sitzt mit einer Lippendichtung auf dem Behälter und bildet dadurch einen annähernd schwappsicheren Abschluß.

Der vorliegenden Erfindung liegt die Aufgabe zugrunde, den Anwendungsbereich dieser bewährten Normbehälter zu erweitern und damit neue Abnehmerkreise zu erschließen. Insbesondere sollen die Behälter künftig auch außerhalb von Großküchen und Gaststätten eingesetzt werden und für längere Lagerzeiten bzw. Transportwege geeignet sein.

Diese Aufgabe wird erfindungsgemäß dadurch gelöst, daß der Deckel eine Öffnung aufweist, in die ein Vakuumventil eingebaut ist, daß das Unterteil des Behälters und der Deckel eine erhöhte Formstabilität zur Aufnahme der beim Evakuieren auftretenden Kräfte aufweisen und die Dichtung vakuumdicht ist.

Die Erfindung geht dabei von der Erkenntnis aus, daß bisher für den Transport insbesondere von Fleisch von Großschlachtereien zu deren Abnehmern Plastiksäcke zur Vakuumverpackung verwendet werden und daß diese Säcke nach dem Öffnen nicht mehr verwendet werden können. Dadurch fallen nicht nur erhebliche Mehrkosten für die Plastiksäcke selbst an, sondern auch für die Abfallbeseitigung derselben. Darüberhinaus kommt es bei dieser Transportart zu einem erheblichen Saftverlust des Fleisches, weil die beim Evakuieren des Kunststoffsackes aus dem Fleisch austretende Flüssigkeit zum großen Teil in den Falten der Schrumpffolie verbleibt und nach dem Öffnen der Verpackung nur noch zu einem kleinen Teil wieder zurückgewonnen wird.

Hier schafft der erfindungsgemäß als Vakuumbehälter ausgebildete Normbehälter auf ideale Weise Abhilfe. Es entfallen nicht nur die Kosten für die Bereithaltung und spätere Beseitigung der Plastiksäcke, sondern man erspart sich auch weitgehend die bisher notwendige Arbeit des Umpackens und den damit verbundenen Flüssigkeitsverlust.

Damit der Behälter genügend Formstabilität zur Aufnahme der beim Evakuieren auftretenden Kräfte aufweist, kann zunächst die Wandstärke des Behälters erhöht werden. Besonders günstig ist es jedoch, statt dessen oder verbunden mit einer nur geringfügigen Vergrößerung der Wandstärke die Form des Behälters zu ändern, derart, daß sein Innenraum eine etwa ovale oder kreisförmige Kontur aufweist und der sich oben anschließende Rand derart radial nach außen läuft, daß eine etwa rechteckige Außenkontur entsteht, die den bisherigen Normmaßen entspricht.

Durch diese Gestaltung ergibt sich zum einen eine wesentlich höhere Stabilität im Vergleich zu den bisher üblichen rechteckigen Normbehältern, weil runde oder ovale Seitenwände druckfester als ebene Seitenwände sind. Man braucht dadurch die Wandstärke nur noch geringfügig erhöhen, was sich günstig auf den Materialeinsatz und das Gewicht des erfindungsgemäßen Behälters auswirkt.

Zum anderen erlaubt der nach außen gezogene Rand eine Anpassung an die bisherigen Formmaße, so daß die bereits vorhandenen Einrichtungen zum Transportieren, Kühlen oder Warmhalten der Normbehälter weiterverwendet werden können.

Ein weiterer Vorteil des erfindungsgemäßen Behälters besteht darin, daß der Deckel allein aufgrund des im Inneren herrschenden Unterdruckes am Behälter festgehalten wird und kein zusätzlicher Verschlußmechanismus notwendig ist. Zum Öffnen braucht lediglich der Unterdruck aufgehoben werden. Hierzu weist das Vakuumventil ein von außen zugängliches Betätigungsglied auf, durch das der Ventilkörper von seinem Sitz abgehoben werden kann. Dieses Betätigungsglied kann auch mit dem Ventilkörper identisch sein.

Damit das Ventil bequem von außen geöffnet werden kann, empfiehlt es sich, daß es nicht wie üblich durch die herrschende Druckdifferenz in der Geschlossenstellung gehalten wird, sondern daß dies durch eine Feder erfolgt, die den Ventilkörper entgegen der auf ihn einwirkenden Druckdifferenz gegen den Ventilsitz drückt. Dadurch braucht man lediglich von oben auf das Ventil drücken, wenn man das Einströmen der Umgebungsluft gestatten will.

Aus konstruktiven Gründen wie auch aus Gründen der leichten Ventilbetätigung hat es sich als zweckmäßig erwiesen, daß der Ventilkörper als hutförmiges Teil ausgebildet ist, das in einem Ventilgehäuse axial verschiebbar geführt ist, wobei die Krempe des Hutes nach unten ragt und mit einem Dichtring zusammenwirkt, wogegen das obere Teil des Hutes als Druckfläche zum Öffnen dient. Um ein unbeabsichtigtes Öffnen etwa während des Transportes zu verhindern, kann der Ventilkörper bzw. sein Betätigungsglied durch eine Sicherungskappe abgedeckt sein oder es steht nur soweit nach oben vor wie das ihn umgebende Ventilgehäuse.

Hinsichtlich der Dichtung hat es sich als günstig erwiesen, daß sie einerseits in einer Ringnut des Dekkels lösbar gehalten ist, während sie andererseits mit einer radial verlaufenden Fläche des Behälterrandes zusammenwirkt. Dadurch führt der Unterdruck im Behälter zu einer erhöhten Anpreßkraft an der Dichtung, verbessert also die Dichtwirkung. Außerdem ergeben sich bei dieser Gestaltung leicht sauber zu haltende Flächen, was beim Transport von Lebensmitteln von besonderer Bedeutung ist. Aus diesem Grund ist es auch günstig, keine Lippendichtung, sondern einen O-Ring zu verwenden.

Weitere Merkmale und Vorteile der Erfindung ergeben sich aus der nachfolgenden Beschreibung eines Ausführungsbeispieles anhand der Zeichnung; dabei zeigt:

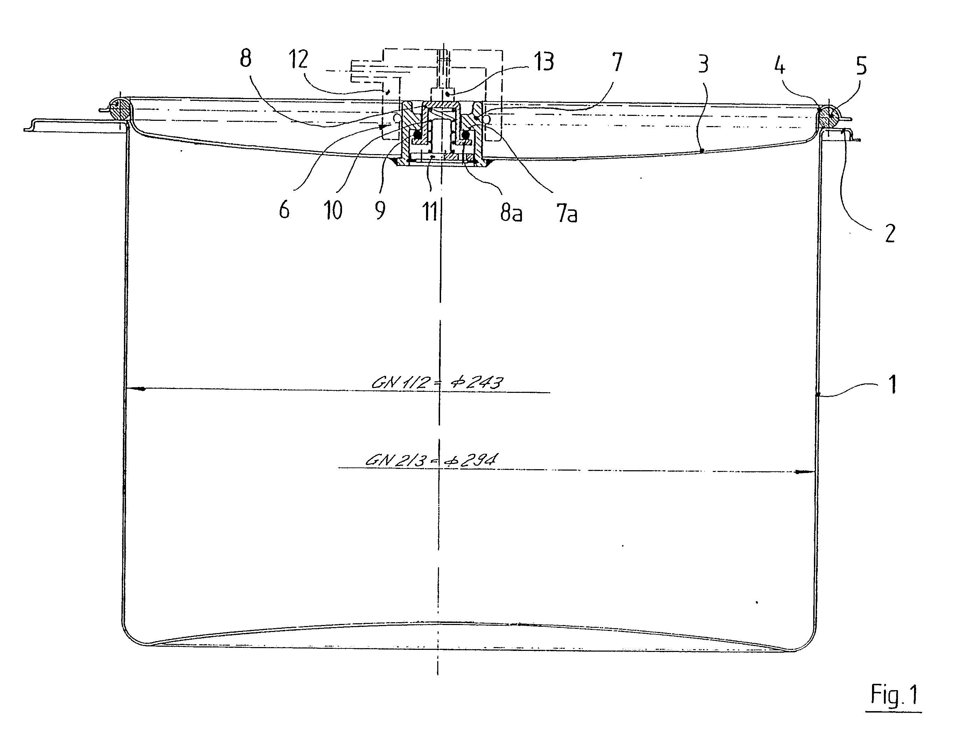

Fig. 1 einen Schnitt durch einen erfindungsgemäßen Normbehälter, wobei in beiden Schnitthälften verschieden große Behälter dargestellt sind und

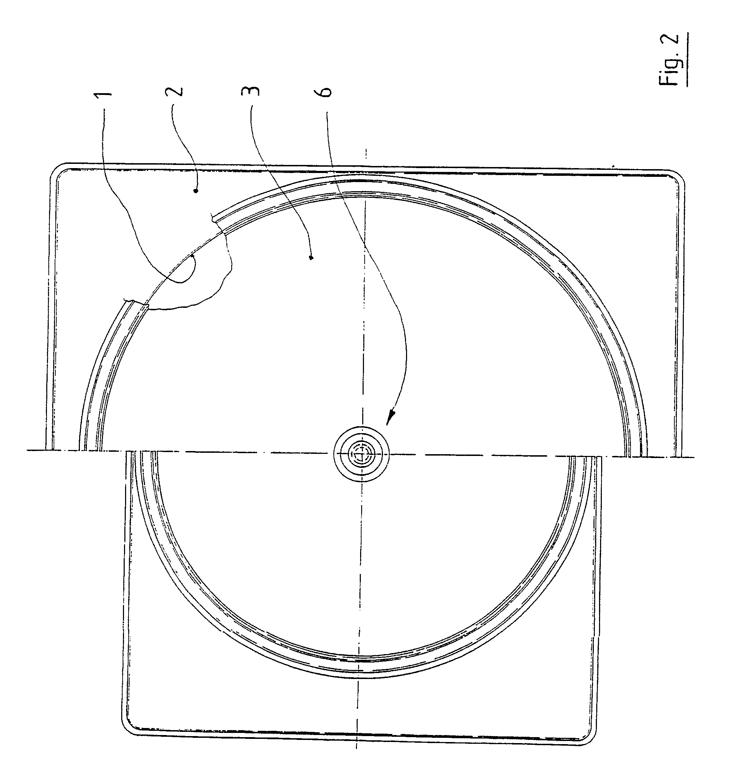

Fig. 2 eine Draufsicht auf die beiden Halbbehälter gemäß Fig. 1

Wie die Figuren zeigen, besteht der Behälter aus einem schalen- oder topfförmigen Unterteil 1 in kreiszylinderischer Form. An dieses Unterteil schließt sich oben ein radial abstehender Rand 2 an. Dieser Rand ist bezogen auf den Umfang des Unterteiles 1 unterschiedlich weit nach außen gezogen, derart, daß der Rand in einer rechteckigen Kontur ausläuft. Der Rand überbrückt also den Zwischenraum zwischen der runden Kontur des Oberteiles und der erwünschten Rechteckkontur der bisher üblichen Normbehälter.

Außerdem kompensiert der überstehende Rand 2 die abgestuften Durchmesser, in denen der erfindungsgemäße Behälter gebaut wird. So ist in den linken Bildhälften der Durchmesser jeweils etwa 5 cm kleiner als in der rechten Bildhälfte und dementsprechend ist der Rand 2 in der linken Bildhälfte weiter nach außen gezogen, damit zumindest in einer Axialebene die Außenkontur den gleichen Mittenabstand aufweist und somit beide Behältergrößen in die gleichen Führungen von Regalwagen, Kühlschränken oder dergleichen hineinpassen.

Der Verschluß des Unterteiles 1 erfolgt durch einen Deckel 3. Er ist in seiner Außenkontur zweckmäßig der Form des Unterteiles 1 angepaßt, also rund. Er könnte aber auch ebensoweit nach außen gezogen sein wie der Rand 2.

Dem Rand 2 gegenüberliegend, und zwar zweckmäßig dem inneren Bereich des Randes 2 gegenüberliegend weist der Deckel 3 eine umlaufende Rille 4 auf, in die ein O-Ring als Dichtung eingesteckt ist.

Im Zentrum des Deckels 3 ist ein Vakuumventil 6 eingebaut. Es besteht aus einem mit dem Deckel verschweißten Ventilgehäuse 7, in dessen Axialbohrung ein hutförmiger Ventilkörper 8 axial verschiebbar geführt ist.

Der Ventilkörper 8 weist an seinem unteren Ende einen überstehenden Rand 8a auf, dessen oberer Radialfläche unter Zwischenlage eines Dichtungsringes 9 mit einer unteren Radialfläche 7a des Ventilgehäuses 7 korrespondiert.

Das Anpressen des Ventilkörpers 8 in die Geschlossenstellung erfolgt entgegen der in evakuierten Zustand wirksamen Druckdifferenz durch eine vorgespannte Druckfeder 10, die im Inneren des Ventilkörpers 8 angeordnet ist und den Ventilkörper nach oben drückt, während sie sich mit ihrem unteren Ende an einer Stützscheibe 11 abstützt. Diese Stützscheibe ist durch einen Sprengring lösbar im Ventilgehäuse 7 gehalten, damit das Ventil bei Bedarf leicht zerlegt und gereinigt werden kann.

Die Funktion ist folgende:

Die zu evakuierenden Lebensmittel werden in den Behälter eingefüllt und der Deckel wird verschlossen. Sodann wird die im Behälter noch befindliche Restluft durch das Vakuumventil 6 abgesaugt. Dazu wird eine nicht näher dargestellte Vakuumpumpe verwendet, an deren Saugseite ein Schlauch mit einer gestrichelt angedeuteten Saugglocke 12 sitzt. Diese Saugglocke wird über den Außenzylinder des Ventilgehäuses 7 geschoben. Sobald dort eine dichte Verbindung gewährleistet ist, kommt der zentrale Stift 13 der Saugglocke in Anlage mit dem Ventilkörper 8 und drückt diesen nach unten, so daß der Behälterinnenraum entlüftet werden kann. Ist der gewünschte Unterdruck von etwa 0,2 bar erreicht, so braucht die Saugglocke 12 lediglich abgezogen werden, worauf der Ventilkörper 8 durch die Feder 10 in die Geschlossenstellung gedrückt wird. Aufgrund des herrschenden Druckgefälles wird der Deckel 3 ohne zusätzliche Halteelemente auf dem Unterteil 1 festgehalten.

Soll der Deckel wieder abgenommen werden, so braucht lediglich der Ventilkörper 8 von Hand nach unten gedrückt werden. Dadurch wird der Innenraum belüftet und die Anpressung des Deckels aufgehoben.

**Ansprüche**

1. Gastro-Normbehälter zum Transportieren, Lagern und Anbieten von Lebensmitteln, insbesondere in Großküchen, Selbstbedienungsgaststätten und dergleichen, bestehend aus einem schalenförmigen Unterteil (1) und einem abnehmbaren Deckel (3), wobei diese beiden Teile insbesondere aus Edelstahl bestehen, und einer dazwischen angeordneten Dichtung (5),
dadurch gekennzeichnet,
daß der Deckel (3) eine Öffnung aufweist, in die ein Vakuumventil (6) eingebaut ist, daß das Unterteil (1) und der Deckel (3) eine erhöhte Formstabilität zur Aufnahme der beim Evakuieren auftreten den Kräfte aufweisen und die Dichtung (5) vakuumdicht ist.

2. Behälter nach Anspruch 1,
dadurch gekennzeichnet,
daß das Unterteil (1) einen Innenraum mit etwa ovaler oder kreisförmiger Kontur und einen sich oben anschließenden Rand (2) mit etwa rechteckiger Außenkontur aufweist.

3. Behälter nach Anspruch 1 oder 2,
dadurch gekennzeichnet,
daß das Vakuumventil (6) ein von außen zugängliches Betätigungsglied zum Abheben des Ventilkörpers (8) von seinem Sitz aufweist.

4. Behälter nach Anspruch 3,
dadurch gekennzeichnet,
daß das Betätigungsglied durch den Ventilkörper (8) selbst gebildet ist.

5. Behälter nach einem der vorhergehenden Ansprüche,
dadurch gekennzeichnet,
daß der Ventilkörper (8) durch eine Feder (10) entgegen der auf ihn einwirkenden Druckdifferenz gegen den Ventilsitz (7a) gedrückt wird.

6. Behälter nach einem der vorhergehenden Ansprüche,
dadurch gekennzeichnet,
daß der Ventilkörper (8) als hutförmiges Teil ausge bildet ist, das in einem Ventilgehäuse (7) axial verschiebbar geführt ist.

7. Behälter nach Anspruch 3 oder 4,
dadurch gekennzeichnet,
daß das Betätigungsglied nach oben höchstens bis zur Höhe eines ihn umgebenden Ventilgehäuses (7) vorsteht.

8. Behälter nach einem der vorhergehenden Ansprüche,
dadurch gekennzeichnet,
daß die Dichtung (5) einerseits mit einer etwa radial verlaufenden Fläche des Behälterrandes (2) oder des Deckels (3) zusammenwirkt.

9. Behälter nach Anspruch 8,
dadurch gekennzeichnet,
daß die Dichtung (5) andererseits in einer Ringnut (4) des Deckels (3) oder des Behälterrandes (2) lösbar gehalten ist.

10. Behälter nach einem der vorhergehenden Ansprüche,
dadurch gekennzeichnet,
daß die Dichtung (5) ein O-Ring ist.

11. Behälter nach Anspruch 2,
dadurch gekennzeichnet,
daß der Deckel (3) eine innerhalb der rechteckigen Randkontur (2) des Unterteiles (1) verlaufende ovale oder kreisförmige Kontur aufweist.

Fig.1

GN 112 = φ243

GN 213 = φ294

EP 0 391 155 A1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2320030 (SALERI ET SALERI) <br> * Seite 1, Zeile 35 - Seite 3, Zeile 13 * | 1, 3-5, <br> 8, 9 | A47J47/10 <br> B65D81/20 |
| A | | 6, 7 | |
| | ---- | | |
| X | DE-U-8535304 (CELIK URSULA) <br> * das ganze Dokument * | 1, 3, 5 | |
| A | | 6-9 | |
| | --- | | |
| X | CH-A-160431 (UEBELHART-MARTI MARIA) <br> * Seite 1, rechte Spalte, Zeile 10 - Seite 2, linke Spalte, Zeile 24 * <br> * Seite 3, linke Spalte, Zeile 28 - rechte Spalte, Zeile 40 * | 1 | |
| | --- | | |
| X | CH-A-102264 (HARTMANN-BURGIN AUGUST) <br> * das ganze Dokument * | 1, 8 | |
| | --- | | |
| A | BE-A-402565 (HAMBURGER FLEISCHGROSSHANDELSGESELLSCHAFT M.B.H.) <br> * das ganze Dokument * | 1, 2, 11 | |
| | ----- | | **RECHERCHIERTE SACHGEBIETE (Int. Cl.5 )** |
| | | | A47J <br> B65D |

Der vorliegende Recherchenbericht wurde für alle Patentansprüche erstellt

| Recherchenort | Abschlußdatum der Recherche | Prüfer |
|---|---|---|
| DEN HAAG | 17 JULI 1990 | FUOCHI R. |

EPO FORM 1503 03.82 (P0403)